# NEW EUROPEAN PATENT SPECIFICATION

(11) **EP 3 377 537 B2**
(45) Date of publication and mention of the opposition decision: **16.02.2022**
(45) Mention of the grant of the patent: 13.03.2019
(21) Application number: 16797866.7
(22) Date of filing: 16.11.2016
(51) Int. Cl.: C08F 2/01, B01J 19/24

(54) **POLYMERIZATION PROCESS WITH A PARTIAL SHUTDOWN PHASE**
POLYMERISIERUNGSVERFAHREN MIT TEILABSCHALTPHASE
PROCÉDÉ DE POLYMÉRISATION À PHASE DE COUPURE PARTIELLE

(30) Priority: 18.11.2015 EP 15195082
(43) Date of publication of application: 26.09.2018
(73) Proprietor: Basell Polyolefine GmbH, 50389 Wesseling (DE)
(72) Inventor: NEUMANN, Erich, 38126 Braunschweig (DE); WOLFRAM, Sven, 53881 Euskirchen (DE); WOLF, Christoph, 50259 Pulheim-Dansweiler (DE); MOHRBUTTER, Juergen, 53347 Alfter (DE); LITTMANN, Dieter, 35325 Mücke (DE)
(74) Representative: LyondellBasell
(86) International application number: PCT/EP2016/077813
(87) International publication number: WO 2017/085097

(56) References cited:
- WO-A1-2015/082568
- US-A1- 2003 206 835
- US-A1- 2005 037 219
- US-A1- 2015 203 606

## Description

### TECHNICAL FIELD

The present disclosure relates to a polymerization process. More specifically, the present disclosure relates to a process for polymerization of ethylene homopolymers or copolymers. In particular, the present disclosure relates to a process for polymerization of ethylene homopolymers or copolymers, wherein the process includes a partial shutdown phase.

### BACKGROUND OF THE INVENTION

Ethylene homopolymers and copolymers are commercial polymers. Those polymers are used in durable and disposable goods, including molded parts and plastic films. Processes for polymerization of ethylene alone or with comonomers can yield ethylene homopolymers and copolymers.

A number of adverse conditions may arise that can affect the performance of a plant during the polymerization process. These conditions can lead to a total shutdown of the plant.

EP 1 589 043 A2 discloses the use of comonomers and chain transfer agents and their effect on physical properties of a polymer product.

US 2010/087606 A1 discloses the use of multiple feeds for introducing monomers and catalysts into a reactor and the effect on physical properties of a polymer product.

US 2004/247493 A1 discloses the effect of chain transfer agents on the physical properties of a polymerization product.

EP 0 272 512 A2 discloses a process for the reduction of the emission of hydrocarbons in pressure-reduction processes in high pressure polymerization reactors.

There is a need to provide improved polymerization processes, which can avert a total shutdown of the plant. In particular, there is a need for polymerization processes which simultaneously complies with relevant regulation, such as national or regional regulations on environmental contamination, and offers improvements in terms of energy, material efficiency, reduced downtime, or a combination of at least two thereof.

### BRIEF SUMMARY OF THE INVENTION

The present disclosure provides a process for polymerizing ethylene, and optionally one or more comonomers, to obtain an ethylene-based polymer in a plant comprising a polymerization reactor having a reactor inlet and having a reactor outlet,
wherein the plant comprises:
   A. a reactor inlet side, which is located upstream of the reactor inlet and a reactor outlet side, which is located downstream of the reactor outlet; and
   B. a recycle connection having an inlet in fluid communication with the reactor outlet side of the plant and an outlet in fluid communication with the reactor inlet side of the plant and having a flow of fluid from the reactor outlet side of the plant into the recycle connection and from the recycle connection to the reactor inlet side of the plant,
wherein the process comprises a polymerization phase, a partial shutdown phase, and the steps of:
   i. during the polymerization phase, reacting ethylene, and optionally one or more comonomers, to obtain the ethylene-based polymer at an operating pressure in the reactor pᵣ¹ and an operating pressure in the recycle connection p_{c}¹,
   ii. for entering into the partial shutdown phase, reducing the pressure in the reactor from the pressure of pᵣ¹ to a pressure of pᵣ² by increasing the flow rate of fluid from the reactor outlet side of the plant into the recycle connection, wherein the relation of pᵣ¹ and pᵣ² is pᵣ² ≤ 0.85 * pᵣ¹ ; and
   iii. for exiting from the partial shutdown phase and re-entering the polymerization phase, increasing the pressure in the reactor from the pressure of pᵣ² to a pressure of pᵣ³, wherein the relation of pᵣ² and pᵣ³ is pᵣ³ ≥ 1.1 * pᵣ²,
wherein the plant includes compressors which increase the pressure of a fluid in the plant and the compression of the fluid is carried out by a combination of a primary compressor and a secondary compressor and wherein the secondary compressor in fluid connection with the reactor and the primary compressor situated in fluid communication with the inlet of the secondary compressor operate during the partial shutdown, and
wherein one or more initiators are fed into the reactor and wherein, during the polymerization phase, the one or more initiators are fed with a flow rate FRᵢₙ¹; and, during the partial shutdown phase, the one or more initiators are fed with a flow rate FRᵢₙ², wherein the relation of FRᵢₙ¹ and FRᵢₙ² is FRᵢₙ² ≤ 0.10 * FRᵢₙ¹.

In some embodiments, the operating pressure pᵣ¹ in the reactor is in the range from 100 to 400 MPa.

In some embodiments, wherein operating pressure in the recycle connection p_{c}¹ is in the range from 15 to 50 MPa.

In some embodiments, wherein the reducing step (ii) occurs in a time period of from 5 seconds to 15 minutes.

In some embodiments, the reducing step (ii) is initiated in response to an event selected from the group consisting of:
(a) a temperature in the plant exceeding a threshold value;
(b) a pressure in the plant exceeding a threshold value; and
(c) a malfunction of a component in the plant.

In some embodiments, the plant further comprises:
C. a valve, being located in the recycle connection, or in a component situated in fluid communication between the reactor outlet side and the inlet of the recycle connection, wherein the valve has a closed position and an open position; and
D. a receiver for receiving fluid from the recycle connection through the valve when the valve is in the open position, and

wherein the valve moves from the closed position to the open position as the pressure in the recycle connection exceeds a set pressure p_{c}², wherein the relation of p_{c}¹ and p_{c}² is p_{c}¹ < p_{c}²≤ 1.5 * p_{c}¹; and
the valve moves from the open position to the closed position as the pressure in the recycle connection decreases below a reset pressure p_{c}³, wherein the relation of p_{c}¹ and p_{c}³ is 0.7 * p_{c}¹ < p_{c}³ ≤ p_{c}¹.

In some embodiments, the receiver is a flare or a cracker or both.

In some embodiments, during the polymerization phase, ethylene is supplied to the plant with a flow rate FR_{E}¹ and, during the partial shutdown phase, ethylene is supplied to the plant with a flow rate FR_{E}², wherein the relation of FR_{E}¹ and FR_{E}² is FR_{E}² ≤ 0.1 * FR_{E}¹.

In some embodiments, the plant further comprises:
E. a compressor, being
(a) located in fluid communication between the outlet of the recycle connection and the reactor inlet and
(b) operated during the partial shutdown phase.

In some embodiments, the plant comprises a product outlet valve, being located between the inlet side of the recycle connection and the product output of the plant, wherein the valve is more open during the polymerization phase than during the partial shutdown phase.

The present disclosure further provides a process for the preparation of a downstream product comprising the following preparation steps:
(a) preparing an ethylene-based polymer by a process according to any of the claims 1 to 11; and
(b) further treating the ethylene-based polymer to obtain the downstream product.

In some embodiments, the obtained ethylene-based polymer or the downstream product is converted into a shaped body.

### DESCRIPTION OF THE DRAWINGS

The following figures illustrate various embodiments of the subject matter disclosed herein. The claimed subject matter may be understood by reference to the following description taken in conjunction with the accompanying figures, in which like reference numerals identify like elements, and in which:
FIG. 1 is a schematic of a plant according to an embodiment of the present disclosure.
FIG. 2 is a schematic showing an embodiment of the flow of fluids through a plant during the polymerization phase.
FIG. 3 is a schematic showing an embodiment of the flow of fluids through a plant during the partial shutdown phase.
FIG. 4 is a graph of an embodiment of the pressure in the reactor as the reactor enters a partial shutdown phase.

### DETAILED DESCRIPTION OF THE INVENTION

The present invention now will be described more fully hereinafter. However, this invention can be embodied in many different forms and should not be construed as limited to the embodiments set forth herein; rather, these embodiments are provided so that this disclosure will satisfy applicable legal requirements. As such, it will be apparent to those skilled in the art that the embodiments can incorporate changes and modifications without departing from the general scope. It is intended to include all the modifications and alterations in so far as the modifications and alterations come within the scope of the appended claims or the equivalents thereof.

As used in this specification and the claims, the singular forms "a," "an," and "the" include plural referents unless the context clearly dictates otherwise.

As used in this specification and the claims, the terms "comprising," "containing," or "including" mean that at least the named compound, element, material, particle, or method step, etc., is present in the composition, the article, or the method, but does not exclude the presence of other compounds, elements, materials, particles, or method steps, etc., even if the other such compounds, elements, materials, particles, or method steps, etc., have the same function as that which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is a means for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

In the present description, the term "first" refers to the order in which a particular species is presented and does not necessarily indicate that a "second" species will be presented. For example, "first polymer composition" refers to the first of at least one polymer composition. The term does not reflect priority, importance, or significance in any other way. Similar terms used that can be used herein include "second," "third," "fourth," etc.

In the present description, the term "α-olefin" or "alpha-olefin" means an olefin of formula CH₂=CH-R, wherein R is a linear or branched alkyl containing from 1 to 10 carbon atoms. The α-olefin can be selected, for example, from: propylene, 1-butene, 1-pentene, 1-hexene, 1-octene, 1-dodecene and the like.

In the present description, the term "vinyl" means a C₂H₃ moiety.

In the present description, the terms "monomer" and "comonomer" are used interchangeably. The terms mean any compound with a polymerizable moiety that is added to a reactor in order to produce a polymer. In those instances in which a polymer is described as comprising one or more monomers, e.g., a polymer comprising propylene and ethylene, the polymer, of course, comprises units derived from the monomers, e.g., -CH₂-CH₂-, and not the monomer itself, e.g., CH₂=CH₂.

In the present description, the term "polymer" means a macromolecular compound prepared by polymerizing monomers of the same or different type. The term "polymer" includes homopolymers, copolymers, terpolymers, interpolymers, and so on.

In the present description, the term "ethylene-based polymer" is used herein broadly to include polymers such as polyethylene, ethylene-alpha olefin copolymers (EAO), and ethylene copolymers having at least 40 percent by weight of ethylene polymerized with the remaining amount of one or more comonomers such as vinyl acetate. Ethylene-based polymers can be made by a variety of processes including batch and continuous processes using single, staged, or sequential reactors, slurry, solution, and fluidized bed processes and one or more catalysts including for example, heterogeneous and homogeneous systems and Ziegler, Phillips, metallocene, single-site, and constrained geometry catalysts to produce polymers having different combinations of properties.

In the present description, the term "fluid communication" refers to conveyance of a fluid between a first component and a second component. The fluid communication can occur directly or indirectly through one or more additional components. The term "direct fluid communication" refers to fluid communication that occurs directly between a first component and a second component. "Direct fluid communication" can include one or more trivial components, such as a joining tube or a valve located between the first component and the second component.

In the present description, the term "flow rate" refers to the conveyance of a quantity of a material during a specific period of time. The quantity can be measured based on volume or mass per time. The material can take various forms, including solids, liquids, and gases. Herein, the flow of certain materials is preferably measured in mass per unit of time, i.e. for instance as kg/s (kilograms per second) or as t/h (tons per hour). One or more different flow rates may be applied to the various phases of the process, which levels may be designated by ordinals such as FR¹, FR², FR³, etc. and material may be designated by subscripts such as FRₐ, FR_{b}, FR_{c}, etc. Such material-related flow rate designations include FR_{E} for a flow rate of ethylene and FRᵢₙ for a flow rate of initiator.

In the present description, the term "kick" refers to a burst of increased fluid flow.

In the present description, the term "inlet" refers to an access point at which fluid enters a component. The term "inlet" is more fully defined by the direction of the fluid's flow, including the direction of flow during the component's routine operation, designed performance, or primary function.

In the present description, the term "reactor inlet" refers to the opening of the polymerization reactor through which a majority of the reactants, expressed as mass, is introduced into the reactor.

In the present description, the term "outlet" refers to an egress point at which fluid exits a component. The term "outlet" is more fully defined by the direction of the fluid's flow, including the direction of flow during the component's routine operation, designed performance, or primary function.

In the present description, the term "reactor outlet" refers to the opening of the polymerization reactor through which a majority of the reaction mixture within the polymerization reactor, expressed as mass, is discharged.

In the present description, the term "partial shutdown phase" refers to a phase during which the pressure in the reactor is reduced and the polymerization reaction in the reactor is slowed or ceased. A partial shutdown may be used to avert a full shutdown, where the cause may be certain malfunctions of the plant, maintenance activities or precautionary safety measures.

In the present description, the term "pressure" refers to the force applied perpendicular to the surface of an object per unit area over which the force is distributed and is measured in MPa. Herein, the polymerization processes utilize various types of equipment. One or more different pressure levels may be applied to the various types of equipment, which levels may be designated by ordinals such as P¹, P², P³, etc. and equipment may be designated by subscripts such as Pₐ, P_{b}, P_{c}, etc. Such equipment-related pressure designations include pᵣ for a pressure in the polymerization reactor and p_{c} for a pressure in the recycle connection.

"Weight Average Molecular Weight" is measured by GPC (Gel Permeation Chromatography) on a Waters 150 gel permeation chromatograph equipped with a differential refractive index (DRI) detector and Chromatix KMX-6 on line light scattering photometer. The system is used at 135°C with 1,2,4-trichlorobenzene as the mobile phase. Shodex (Showa Denko America, Inc.) polystyrene gel columns 802, 803, 804 and 805 are used. This technique is discussed in "Liquid Chromatography of Polymers and Related Materials III", J. Cazes, editor, Marcel Dekker, 1981, p. 207. No corrections for column spreading are employed. Weight average molecular weight is calculated from elution times. The numerical analyses are performed using the commercially available Beckman/CIS customized LALLS software in conjunction with the standard Gel Permeation package.

In general embodiments, the present disclosure provides a process for polymerizing ethylene, and optionally one or more comonomers, to obtain an ethylene-based polymer in a plant comprising a polymerization reactor having a reactor inlet and having a reactor outlet, wherein the plant includes
A. a reactor inlet side, which is located upstream of the reactor inlet and a reactor outlet side, which is located downstream of the reactor outlet; and
B. a recycle connection having an inlet in fluid communication with the reactor outlet side of the plant and an outlet in fluid communication with the reactor inlet side of the plant and having a flow of fluid from the reactor outlet side of the plant into the recycle connection and from the recycle connection to the reactor inlet side of the plant,
wherein the process comprises a polymerization phase, a partial shutdown phase, and the steps of:
i. during the polymerization phase, reacting ethylene, and optionally one or more comonomers, to obtain the ethylene-based polymer at an operating pressure in the reactor pᵣ¹ and an operating pressure in the recycle connection p_{c}¹,
ii. for entering into the partial shutdown phase, reducing the pressure in the reactor from the pressure of pᵣ¹ to a pressure of pᵣ² by increasing the flow rate of fluid from the reactor outlet side of the plant into the recycle connection, wherein the relation of pᵣ¹ and pᵣ² is pᵣ² ≤ 0.85 * pᵣ¹ ; and
iii. for exiting from the partial shutdown phase and re-entering the polymerization phase, increasing the pressure in the reactor from the pressure of pᵣ² to a pressure of pᵣ³, wherein the relation of pᵣ² and pᵣ³ is pᵣ³ ≥ 1.1 * pᵣ².

The process for polymerization of ethylene to obtain an ethylene-based polymer can yield polyethylene homopolymers or copolymers depending on the reactants. As such, the polymer product is preferably a polyethylene homopolymer, a polyethylene copolymer, or a derivative thereof.

Examples of ethylene-based polymers include ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), medium-density polyethylene (MDPE), linear low-density polyethylene (LLDPE), low-density polyethylene (LDPE), very-low-density polyethylene (VLDPE), and chlorinated polyethylene (CPE). Preferred ethylene-based polymers are one or more selected from the group consisting of high-density polyethylene (HDPE), linear low-density polyethylene (LLDPE), low-density polyethylene (LDPE) and are more preferred low-density polyethylene (LDPE).

It is preferred for the ethylene-based polymer to have a weight average molecular weight determined by GPC with a light scattering detector in the range from 500 to 5,000,000 g/mol, preferably in the range 750 to 1,000,000 g/mol, more preferably in the range from 1000 to 500,000 g/mol.

In one embodiment, the ethylene-based polymer has a density in the range from 0.89 to 0.96 g/cm³, preferably in the range from 0.90 to 0.95 g/cm³, more preferably in the range from 0.91 to 0.94 g/cm³.

The reaction process may involve reacting ethylene with one or more comonomers.

Polyethylene copolymers can be ordered polymers, partially ordered polymers and non-ordered polymers. In a particular embodiment, the content of non-ethylene comonomer units is in the range from 0.0001 to 60 wt.%, preferably in the range from 0.001 to 50 wt.%, more preferably in the range from 0.01 to 40 wt.%, based on the total weight of the copolymer.

Preferred comonomers are one or more selected from the group consisting of: an α,β-unsaturated carboxylic acid, the ester of an α,β-unsaturated carboxylic acid, the anhydride of an α,β-unsaturated carboxylic acid or an olefin. Preferred olefins in this context are 1-olefins, preferably selected from the group consisting of: propene, 1-butene, 1-pentene, 1-hexene, 1-octene, 1-decene. Preferred α,β-unsaturated carboxylic acids in this context are preferably C₃-C₈ α,β-unsaturated carboxylic acids, preferably one or more selected from the group consisting of: maleic acid, fumaric acid, itaconic acid, acrylic acid, methacrylic acid and crotonic acid, or derivatives of one or more thereof. Preferred esters of α,β-unsaturated carboxylic acids, or anhydrides of an α,β-unsaturated carboxylic acid are preferably derived from C₃-C₈ carboxylic acids. Preferred esters or anhydrides in this context comprise from 3 to 13 carbon atoms. Preferred α,β-esters are one or more selected from the group consisting of: methyl methacrylate, ethyl methacrylate, n-butyl methacrylate or tert-butyl methacrylate, methyl acrylate, ethyl acrylate, n-butyl acrylate, 2-ethylhexyl acrylate and tert-butyl acrylate. Furthermore, carboxylate anions, preferably vinyl acetate, may be employed as comonomers. Preferred anhydrides are selected from the group consisting of: methacrylic anhydride, maleic anhydride and itaconic anhydride.

In one embodiment, the comonomer is one or more selected from the group consisting of: 1-hexene, acrylic acid, n-butyl acrylate, tert-butyl acrylate, 2-ethylhexyl acrylate, vinyl acetate and vinyl propionate.

In one embodiment, one or more vinyl silanes is/are employed as comonomer, preferably comprising silicon and one or more vinyl groups. Preferred vinyl silanes are vinyltrimethoxysilane or vinyltriethoxysilan.

The polymerization process may involve one or more initiators or catalysts. Useful initiators can be radical initiators, coordinative initiators, or mixture of two or more of these compounds.

Preferred radical initiators are substances that can produce radical species under the conditions in the polymerization reactor, for example, oxygen, air, azo compounds or peroxidic polymerization initiators. In a preferred embodiment of the disclosure the polymerizations is carried out by using oxygen, either fed in the form of pure O₂ or as air. Initiation using organic peroxides or azo compounds also represents a preferred embodiment of the present disclosure. Azoalkanes (diazenes), azodicarboxylic esters, azodicarboxylic dinitriles and hydrocarbons which decompose into free radicals and are also referred as C-C initiators are also suitable. It is possible to use either individual initiators or preferably mixtures of various initiators. A large range of initiators, in particular peroxides, are commercially available, for example the products of Akzo Nobel offered under the trade names Trigonox^{®} or Perkadox^{®}.

Suitable peroxidic polymerization initiators include, for example, 1,1-di(tert-butyl-peroxy)cyclohexane, 2,2-di(tert-butylperoxy)butane, tert-butyl peroxy-3,5,5-trimethyl-hexanoate, tert-butyl peroxybenzoate, 2,5-dimethyl-2,5-di(tert-butylperoxy)hexane, tert-butyl cumyl peroxide, di-tert-butyl peroxide and 2,5-dimethyl-2,5-di(tert-butylperoxy)hex-3-yne, and particular preference is given to using tert-butyl peroxy-3,5,5-trimethylhexanoate, di-(2-ethylhexyl)peroxydicarbonate or tert-butyl peroxy-2-ethylhexanoate.

Useful coordinative initiators comprise a variable oxidation state metal. In some embodiments, the metal is a transition metal, a p block metal, a lanthanide, or an actinide. In particular embodiments, the coordinative initiator is a transition metal selected from the group consisting of Ti, Zr, Hf, V, Mo, Cr, W, and In. In other embodiments, the coordinative initiators are based on the metals as ligands with a halogen or an organic moiety. In addition to the coordinative initiators, the process may contain cocatalysts. Examples of useful cocatalyst are alkyl aluminum or derivatives thereof.

A plant may be used for the polymerization of ethylene, and optionally one or more comonomers, to obtain an ethylene-based polymer. The plant includes a polymerization reactor, in which the actual conversion of ethylene and the optional one or more comonomers to the ethylene-based polymer occurs, and further components. These further components may include apparatuses for conveying reactants to the reactor such as compressors or pumps, heat-exchangers such as coolers or heater, or apparatuses for the work-up of the obtained polymer such as separators or pelletizer.

The polymerization reactor has a reactor inlet and a reactor outlet. The reactor inlet is the opening of the polymerization reactor through which a majority of the reactants, expressed as mass, is introduced into the reactor. Preferably a majority of ethylene and the optional one or more comonomers are introduced through the reactor inlet the polymerization reactor. The reactor outlet is the opening of the polymerization reactor through which a majority of the reaction mixture within the polymerization reactor, expressed as mass, is discharged. Preferably a majority of the obtained ethylene-based polymer, and more preferably the entire obtained ethylene-based polymer are discharged from the polymerization reactor through the reactor outlet.

The plant can accordingly be logically divided in a polymerization reactor; a reactor inlet side of the plant, which is located, with respect to the majority of the reactants introduced into the reactor, upstream of the reactor inlet; and a reactor outlet side, which is located, with respect to the majority of the reaction mixture discharged from the polymerization reactor, downstream of the reactor outlet. In addition, the plant according to the present disclosure further includes at least one recycle connection for returning fluid, which has passed the polymerization reactor to the polymerization. This recycle connection provides a fluid communication from the reactor outlet side of the plant to the reactor inlet side of the plant.

Besides the inlet reactor and the reactor outlet, the polymerization reactor has preferably further openings through which fluids such as ethylene, comonomer or initiator can flow, preferably in a controlled manner, e.g. controlled by one or more valves.

In a preferred embodiment of the present disclosure, the reactor is a tubular reactor. In an aspect of this embodiment, the reactor has a minimum flow distance between its inlet and its outlet of at least 100 m preferably at least 500 m, more preferably at least 1 km, most preferably at least 2 km. In one embodiment, the reactor has one or more sites at which a material, preferably an initiator, can be introduced into the reactor.

In another embodiment, the reactor is of the autoclave type, preferably with at least one stirrer comprised within the reactor. In one aspect of this embodiment, the minimum flow distance between the input and output is in the range from 1 to 50 m, preferably in the range from 3 to 30 m, more preferably in the range from 5 to 20 m. In a first aspect, the reactor has at least one stirrer within the reactor. In a second aspect, the minimum flow distance between the input and output is in the range from 1 to 50 m. Depending on various factors, the minimum the range can be from 3 to 30 m or in the range from 5 to 20 m.

The plant used in the process of the present disclosure includes compressors which increase the pressure of a fluid in the plant.

The compression of the fluid is carried out by a combination of a primary compressor and a secondary compressor in which the primary compressor preferably first compresses the fluid a pressure of from 10 MPa to 50 MPa and the secondary compressor then further compresses the fluid to the operating pressure pᵣ¹. Preferably the primary compressor and the secondary compressor are multistage compressors. It is further possible to separate one or more stages of one or both of these compressors and divide the stages into separated compressors. However, a series of one primary compressor and one secondary compressor may be used for compressing the fluid to the operating pressure pᵣ¹. In such cases, sometimes the whole primary compressor is designated as primary compressor. However, it is also common to designate the one or more first stages of the primary compressor, which compress the recycle gas from the low-pressure product separator to the pressure of the fresh ethylene feed, as booster compressor and then just the one or more subsequent stages as primary compressor although the booster compressor and the subsequent stages are part of one apparatus. A sometimes used name for the secondary compressor is hyper compressor. The capacity of the secondary compressor, that means the feed rate of compressed fluid from the compressor combination to the reactor, is preferably from 60 t/h to 210 t/h, more preferably from 100 t/h to 180 t/h and especially preferred from 120 t/h to 160 t/h.

The plant used in the process of the present disclosure preferably includes separators which are suitable for separating the fluid flow into two or more constituents, preferably two or more constituents selected from the group consisting of: reactant, product, impurity, by-product and catalyst. In one embodiment, the plant comprises one or more separators, which are preceded, preferably directly preceded, by one or more cooling channels. In one embodiment, the plant comprises one or more separators which are suitable for separating a fluid into two or more constituents, wherein two of the constituents are in different phases, preferably two different phases selected from the group consisting of: a gas, a liquid, a solid, a hypercritical fluid and a metaphase.

The plant used in the process of the present disclosure further includes a recycle connection which is positioned in fluid communication between the reactor outlet and the reactor inlet for returning fluid, which has passed the polymerization reactor to the polymerization. The recycle connection has an inlet in fluid communication with the reactor outlet side of the plant and an outlet in fluid communication with the reactor inlet side of the plant and has a flow of fluid from the reactor outlet side of the plant into the recycle connection and from the recycle connection to the reactor inlet side of the plant. The fluid is preferably cooled by passing through the recycle connection, preferably to an extent which allows a favorable fluid temperature for re-introduction into the compressor.

In one embodiment, the temperature drop in the fluid on passing through the recycle connection is in the range from 50 to 300 K, preferably in the range from 180 to 290, more preferably in the range from 200 to 260 K. In one embodiment, the fluid enters the recycle connection at a temperature in the range from 100 to 380°C, preferably in the range from 150 to 350°C, more preferably in the range from 200 to 300°C. In one embodiment, the fluid exits the recycle connection at a temperature in the range from 20 to 80°C, preferably in the range from 30 to 60°C, more preferably in the range from 35 to 55°C.

In one embodiment, the fluid passes through two or more coolers in the recycle connection. In one aspect of this embodiment, the temperature of the fluid is reduced by from 20 to 150 K, preferably from 25 to 130 K, more preferably from 35 to 110 K in the first of the two or more coolers. In another aspect of this embodiment, the temperature of the fluid is reduced by from 20 to 150 K, preferably from 25 to 130 K, more preferably from 35 to 110 K in the second of the two or more coolers.

The recycle connection preferably allows the content of one or more products/side-products, preferably a waxy product/side-product, in the fluid to be reduced. The recycle connection preferably decreases the wt.% of one or more products/side-products, preferably one or more waxy products/side-products in the fluid flow, preferably by at least 0.01 wt.%, more preferably by at least 0.05 wt.%, most preferably by at least 0.1 wt.%, this decrease in wt.% being expressed as the wt.% in the input minus the wt.% in the output.

The fluid communication between the reactor outlet and the inlet of the recycle connection may be direct or indirect, preferably indirect, preferably via one or more components selected form the group consisting of: a cooler, a separator and a pressure let down.

In one embodiment, the plant comprises a high pressure recycle connection, which is operated with fluid at a pressure p_{c}¹ in the range from 15 to 50 MPa, preferably in the range from 20 to 40 MPa, more preferably in the range from 25 to 35 MPa.

In one embodiment, the plant comprises a low pressure recycle connection, which is operated with fluid at a pressure in the range from 0.01 to 20 MPa, preferably in the range from 0.05 to 10 MPa, more preferably in the range from 0.1 to 5 MPa.

In one embodiment, the plant comprises one or more recycle connections exhibiting a low pressure drop between inlet and outlet, preferably exhibiting a difference in pressure less than 50 MPa, more preferably less than 20 MPa, most preferably less than 5 MPa. In one aspect of the present disclosure, the plant comprises a high pressure recycle connection exhibiting a low pressure drop between inlet and outlet.

The plant may contain additional components, such as heat exchangers, pressure let down valves, etc.

The polymerization is preferably carried out at a temperature in the range from 100 to 380 °C, preferably in the range from 130 to 365 °C, more preferably in the range from 150 to 350 °C.

The polymerization is preferably carried out at an operating pressure in the reactor pᵣ¹ of from 100 to 400 MPa. The operating pressure in the reactor pᵣ¹ is more preferably in the range from 125 to 350 MPa and in an especially preferred embodiment in the range from 150 to 325 MPa.

The process of the present disclosure comprises a partial shutdown phase. A partial shutdown according to the present disclosure can be employed as an alternative to a full shutdown and depressurization of the reactor into the environment when the cause of the shutdown does not require full shutdown of the plant. A partial shutdown can avoid one or more selected from the group consisting of: a reduced energy efficiency, wastage or materials, plant downtime and environmental contamination. Possible advantages of a partial shutdown over a full shutdown may be that the plant can be more quickly returned to an operating polymerization phase and that there is less or no requirement for cleaning of the reactor following partial shutdown.

In order to enter a partial shutdown phase according to the present disclosure, the pressure in the reactor pᵣ¹ is reduced to a pressure of pᵣ² by increasing the flow rate of fluid from the reactor into a recycle connection, preferably a high pressure recycle connection. The relation of the operating pressure in the reactor pᵣ¹ and the pressure in the reactor during the partial shutdown phase pᵣ² is pᵣ² ≤ 0.85 * pᵣ¹, preferably pᵣ² ≤ 0.80 * pᵣ¹, and more preferably pᵣ² ≤ 0.75 * pᵣ¹.

Preferably the reducing step (ii) for reducing the pressure in the reactor from pᵣ¹ to pᵣ² occurs in a time period of from 5 seconds to 15 minutes, preferably of from 1 to 10 minutes, more preferably of from 3 to 7 minutes.

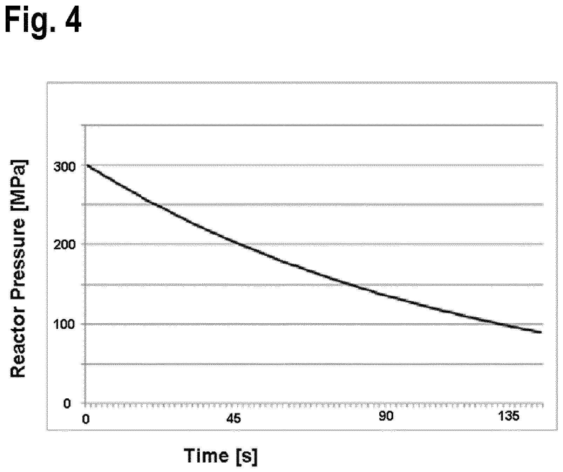

FIG. 4 is a graph of the pressure in the reactor as the reactor enters a partial shutdown phase. It shows depressurization to the partial shutdown phase, from a reactor pressure of pᵣ¹ of about 300 MPa to a reactor's reduced pressure of pᵣ² of about 200 MPa in about 45 seconds.

In one embodiment, the increased flow of fluid from the reactor into the recycle connection to enter the partial shutdown phase is not constant, preferably consisting of bursts of increased fluid flow (otherwise called as "kicks"). In one aspect of this embodiment, kicks are employed during the operational polymerization phase and kicks are continued to be employed when entering into the shutdown phase. The pressure drop in the reactor while entering the partial shutdown phase can be augmented by either increasing the amplitude of the kicks or increasing the frequency of the kicks or both.

In a preferred embodiment of the process, entry into the partial shutdown phase is initiated in response to an event selected from the group consisting of:
(a) a temperature measured in the plant being beyond a threshold value, preferably a temperature exceeding a threshold value, preferably in the reactor;
(b) a pressure measured in the plant being beyond a threshold value, preferably a pressure exceeding a threshold value, preferably in the reactor;
(c) a component of the plant malfunctioning or otherwise not operating normally.

In a preferred embodiment of the present disclosure, the recycle connection or a component situated in fluid communication between the outlet side of the reactor and the inlet of the recycle connection, into which the reactor is depressurized, comprises a valve having a closed position and an open position and the valve provides fluid communication with a receiver for receiving fluid from the recycle connection through the valve when the valve is in the open position. The valve moves from the closed position to the open position as the pressure in the recycle connection exceeds a set pressure p_{c}², wherein the relation of p_{c}¹ and p_{c}² is p_{c}¹ < p_{c}² ≤ 1.5 * p_{c}¹; preferably p_{c}¹ < p_{c}² ≤ 1.3 * p_{c}¹; and more preferably p_{c}¹ < p_{c}² ≤ 1.2 * p_{c}. The valve moves from the open position to the closed position as the pressure in the recycle connection decreases below a reset pressure p_{c}³, wherein the relation of p_{c}¹ and p_{c}³ is 0.7 * p_{c}¹ < p_{c}³ ≤ p_{c}¹; preferably 0.75 * p_{c}¹ < p_{c}³ ≤ p_{c}¹; and more preferably 0.8 * p_{c}¹ < p_{c}³ ≤ p_{c}¹. In one aspect of this embodiment the valve opens at a pressure in the range from 25 to 35 MPa, preferably in the range from 26 to 32 MPa, more preferably in the range from 27 to 31 MPa. In one aspect of this embodiment the valve closes at a pressure in the range from 18 to 30 MPa, preferably the range from 20 to 28 MPa, more preferably in the range from 22 to 25 MPa.

The receiver for receiving fluid from the recycle connection is preferably a flare or a cracker or both. Preferred flares in the context of the present disclosure are suitable for combustion of material, preferably of fluid. In one embodiment of the present disclosure, the plant comprises one or more flares. Preferred crackers in the context of the present disclosure are suitable for obtaining ethylene from a hydrocarbon, preferably by breaking a carbon-carbon bond. In one aspect of this embodiment, the cracker is an ethylene-plant comprising one or more ethylene-plant units for converting a hydrocarbon into ethylene. In one aspect of this embodiment, the cracker comprises a dehydrogenator which is capable of removing hydrogen to obtain an unsaturated C=C bond.

Preferably, the flow of ethylene to the plant is lower during the partial shutdown phase than during the operational polymerization phase and the relation of FR_{E}¹, which is the flow rate of ethylene supplied to the plant during the polymerization phase, and FR_{E}², which is the flow rate of ethylene supplied to the plant during the partial shutdown phase, is FR_{E}² ≤ 0.1 * FR_{E}¹; preferably FR_{E}² ≤ 0.05 * FR_{E}¹; more preferably FR_{E}² ≤ 0.01 * FR_{E}¹ and most preferably no ethylene flows into the plant during the partial shutdown phase. Preferably also the flow of comonomer to the reactor is lower during the partial shutdown phase than during the operational polymerization phase and most preferably no comonomer is supplied to the reactor during the partial shutdown phase.

Moreover, the flow of initiator to the reactor is lower during the partial shutdown phase than during the operational polymerization phase and the relation of FRᵢₙ¹, which is the flow rate of the one or more initiators fed to the plant during the polymerization phase, and FRᵢₙ², which is the flow rate of the one or more initiators fed to the plant during the partial shutdown phase, is FRᵢₙ² ≤ 0.1 * FRᵢₙ¹; preferably FRᵢₙ² ≤ 0.05 * FRᵢₙ¹; more preferably FRᵢₙ² ≤ 0.01 * FRᵢₙ¹ and most preferably no initiator is fed into the plant during the partial shutdown phase.

The compressor in fluid connection with the reactor (referred to above as the "secondary" compressor) operates during the partial shutdown and the compressor situated in fluid communication with the inlet of the secondary compressor (referred to above as the "primary" compressor) operates during the partial shutdown phase. Preferably the primary compressor is operating in idle mode during the partial shutdown, wherein the flow of fluid through the primary compressor during the partial shutdown phase is lower than that during the operational polymerization phase, more preferably with no significant intake of fluid into the primary compressor inlet.

Preferably, the plant comprises a product outlet valve, being located between the inlet side of the recycle connection and the product output of the plant, wherein the valve is more open during the polymerization phase than during the partial shutdown phase. In one aspect of this embodiment, the cross sectional area of the opening in the valve during the partial shutdown phase is less than the cross sectional area of the opening in the valve during the polymerization phase, preferably cross sectional area of the opening in the valve during the partial shutdown phase is less than 50 %, more preferably less than 10 %, further more preferably less than 2 % of the opening in the valve during the polymerization phase; and most preferably the product outlet valve is fully closed during the partial shutdown phase.

For exiting from the partial shutdown phase and re-entering the polymerization phase, the pressure in the reactor is increased from the pressure of pᵣ² to a pressure of pᵣ³, wherein the relation of pᵣ² and pᵣ³ is pᵣ³² ≥ 1.1 * pᵣ², preferably pᵣ³ ≥ 1.15 * pᵣ²; and more preferably pᵣ³ ≥ 1.2 * pᵣ². In a preferred embodiment of the present disclosure, during the pressure increasing step (iii), first the pressure within the reactor is increased and then the flow rate of the one or more initiators fed to the plant is raised from FRᵢₙ² to a higher flow rate after a sufficiently high pressure within the reactor has been reached. If the initiator is introduced into the reactor at more than one position of the reactor, the increase of the flow rate of the one or more initiators is preferably not carried out at all positions at the same time but subsequently for the individual positions. Connected with the increased flow rate of the one or more initiators to the reactor, also the flow rate of ethylene supplied to the plant rises.

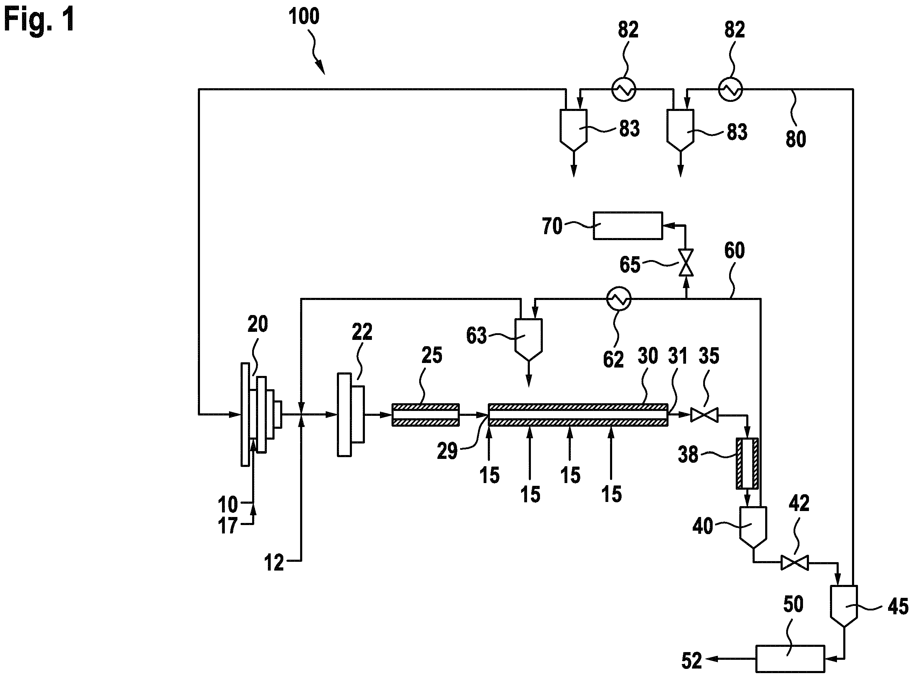

FIG. 1 shows a schematic of a plant 100 according to an embodiment of the present disclosure. Polymerization is carried out in a tubular reactor 30. Ethylene 10 and optional chain transfer agents 17 are combined as a fluid and introduced through a primary compressor 20, combined with optional comonomers 12 through a secondary compressor 22, and a preheater 25 through the inlet 29 of the reactor 30 into reactor 30. Initiator 15 is introduced into reactor 30 at four positions.

After the reactor 30, the fluid passes from the reactor's outlet 31 through a high pressure let down valve 35 and a post reactor cooler 38 into a high pressure separator 40 in which a separation into a gaseous composition and a liquid composition occurs.

Liquid products from the high pressure separator 40 pass through a valve 42 to a low pressure separator 45 for further separation into a gaseous composition and a liquid. Liquid products from the low pressure separator 45 pass to a pelletizer 50 which outputs solid pellets of product 52.

A high pressure recycle connection 60 provides a fluid connection between the reactor's outlet 31 and inlet 29. The high pressure recycle connection 60 includes one or more coolers 62 and a one or more separators 63.

The high pressure recycle connection 60 can be in fluid communication with a receiver 70 such as a flare or a cracker via a pressure-operated valve 65. Fluid communication between the high pressure recycle connection 60 and the receiver 70 is established above a set pressure in the recycle connection 60.

A low pressure recycle connection 80 also provides a fluid connection between the reactor's outlet 31 and inlet 29. The low pressure recycle connection 80 includes one or more coolers 82 and a one or more separators 83.

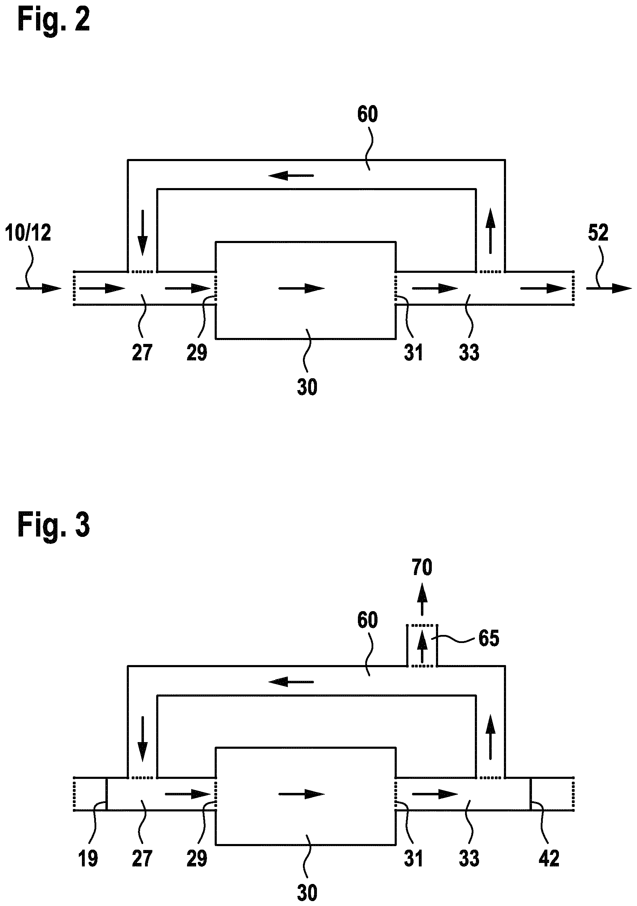

FIG. 2 is a schematic showing of the flow of fluids through a plant during the polymerization phase. Ethylene 10 and optional comonomers 12 enter as fluid into the reactor inlet side of the plant 27 and flow through reactor inlet 29 into reactor 30. The fluid exits reactor 30 though reactor outlet 31 and flows into the reactor outlet side of the plant 33 in which the fluid is separated into (i) product 52 which exits the plant and (ii) residual fluid for recycle which flows into the recycle connection 60. After passing through the recycle connection 60, the fluid passes again to the inlet side of the plant 27 for reentry into the reactor 30. A single recycle connection 60 is shown in FIG. 2, but the plant can also be configured with one or more further recycle connection(s) 80 in parallel with the recycle connection 60, each allowing fluid flow from the reactor outlet side of the plant 33 to the reactor inlet side of the plant 27.

FIG. 3 is a schematic showing of the flow of fluids through a plant during the partial shutdown phase. During the partial shutdown phase, little or no reactant material enters the plant and little or no product material exits the plant. Material is prevented from entering to the plant by closing valves 19 on the rector inlet side of the plant and from exiting the plant by closing valves 42 on the reactor outlet side of the plant. Fluid enters the reactor 30 through reactor inlet 29 after having passed components situated on the reactor inlet side of the plant 27. Fluid exits the reactor 30 though reactor outlet 31 and passes through components situated on the reactor outlet side of the plant 33 before entering the recycle connection 60. The fluid passes through the recycle connection 60 to return to the reactor inlet side of the plant 27. Some of the fluid exits the recycle connection 60 via an open valve 65 to a receiver 70 rather than returning to the reactor inlet side of the plant 27.

In one aspect, the present disclosure relates to a process for the preparation of a downstream product comprising the following preparation steps:
(a) preparing an ethylene-based polymer by a polymerization process according to the present disclosure; and
(b) further treating the ethylene-based polymer to obtain the downstream polymer.

In a further aspect, the present disclosure relates to a process in which the obtained ethylene-based polymer or the downstream product is converted into a shaped body.

The process of the present disclosure can be carried out in a plant for polymerization comprising the following components in fluid communication:
A. a reactor having a reactor inlet and a reactor outlet;
B. recycle connection (60) positioned in fluid communication between the reactor outlet (31) and the reactor inlet (29);
wherein the plant comprises a valve (65), being located in fluid communication with the recycle connection, or being located in fluid communication with a component situated between the reactor outlet (31) and the inlet of the recycle connection, and the valve (65) when being in an open position provides fluid communication to a receiver (70), preferably a flare or a cracker or both; wherein the valve (65) is configured to move to an open position as the pressure in the recycle connection (60) exceeds a set pressure.

### EXAMPLES

The following examples are included to demonstrate embodiments. It should be appreciated by those of skill in the art that the techniques disclosed in the examples which follow represent techniques discovered to function well, and thus can be considered to constitute exemplary modes of practice. However, those of skill in the art should, in light of the present disclosure, appreciate that many changes can be made in the specific embodiments which are disclosed and still obtain a like or similar result without departing from the spirit and scope of this disclosure.

### EXAMPLE 1

A polymerization reaction was carried out in a plant according to FIG. 1. The operating pressure in the reactor Pᵣ¹ was 300 MPa.

The reactor was put into a partial shutdown phase by increasing the rate of flow of fluid from the reactor into the high pressure recycle connection 60 to achieve a reactor pressure profile as depicted in FIG. 4. The flow into the plant of ethylene, initiator, comonomer was reduced to zero. About 10 wt.% of the contents of the reactor flowed to the flare and cracker 70 via the pressure-operated valve 65.

The plant was then restored to a polymerization phase by decreasing the rate of flow of fluid from the reactor into the high pressure recycle connection 60 and increasing the flow into the plant of ethylene, initiator, comonomer and modifier to operational values.

### COMPARATIVE EXAMPLE A

A polymerization reaction was carried out in a plant according to FIG. 1. The operating pressure in the reactor was 300 MPa.

The reactor was shut down by depressurizing the reactor via a blow down to the environment. About 70 wt.% of the contents of the reactor passed through the blow down to the environment. The flow into the plant of ethylene, initiator, co-polymer and modifier to the plant was reduced to zero.

The reactor was then cleaned, and the operational process was restarted.

**Table 1**

| Example | Material efficiency | Energy efficiency | Downtime | Environmental contamination |
|---|---|---|---|---|
| Example 1 | ++ | ++ | ++ | ++ |
| Comparative Example A | - | - | - | - |
| Key: ++ : very good, - : poor | | | | |

It should be understood that various changes, substitutions and alterations can be made herein without departing from the spirit and scope of this disclosure as defined by the appended claims. Moreover, the scope of the present application is not intended to be limited to the particular embodiments of the process, machine, manufacture, composition of matter, means, methods and steps described in the specification. As one of the ordinary skill in the art will readily appreciate from the disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A process for polymerizing ethylene, and optionally one or more comonomers, to obtain an ethylene-based polymer in a plant comprising a polymerization reactor having a reactor inlet and having a reactor outlet,
wherein the plant comprises:
A. a reactor inlet side, which is located upstream of the reactor inlet and a reactor outlet side, which is located downstream of the reactor outlet; and
B. a recycle connection having an inlet in fluid communication with the reactor outlet side of the plant and an outlet in fluid communication with the reactor inlet side of the plant and having a flow of fluid from the reactor outlet side of the plant into the recycle connection and from the recycle connection to the reactor inlet side of the plant,
wherein the process comprises a polymerization phase, a partial shutdown phase, and the steps of:
i. during the polymerization phase, reacting ethylene, and optionally one or more comonomers, to obtain the ethylene-based polymer at an operating pressure in the reactor pᵣ¹ and an operating pressure in the recycle connection p_{c}¹,
ii. for entering into the partial shutdown phase, reducing the pressure in the reactor from the pressure of pᵣ¹ to a pressure of pᵣ² by increasing the flow rate of fluid from the reactor outlet side of the plant into the recycle connection, wherein the relation of pᵣ¹ and pᵣ² is pᵣ² ≤ 0.85 ^{∗} pᵣ¹; and
iii. for exiting from the partial shutdown phase and re-entering the polymerization phase, increasing the pressure in the reactor from the pressure of pᵣ² to a pressure of pᵣ³, wherein the relation of pᵣ² and pᵣ³ is pᵣ³ ≥ 1.1 ^{∗} pᵣ²,
wherein the plant includes compressors which increase the pressure of a fluid in the plant and the compression of the fluid is carried out by a combination of a primary compressor and a secondary compressor and wherein the secondary compressor in fluid connection with the reactor and the primary compressor situated in fluid communication with the inlet of the secondary compressor operate during the partial shutdown, and
wherein one or more initiators are fed into the reactor and wherein, during the polymerization phase, the one or more initiators are fed with a flow rate FRᵢₙ¹; and, during the partial shutdown phase, the one or more initiators are fed with a flow rate FRᵢₙ², wherein the relation of FRᵢₙ¹ and FRᵢₙ² is FRᵢₙ² ≤ 0.10 ^{∗} FRᵢₙ¹.

2. The process according to claim 1, wherein the operating pressure pᵣ¹ in the reactor is in the range from 100 to 400 MPa.

3. The process according to claim 1 or 2, wherein operating pressure in the recycle connection p_{c}¹ is in the range from 15 to 50 MPa.

4. The process according to any of the preceding claims, wherein the reducing step (ii) occurs in a time period of from 5 seconds to 15 minutes.

5. The process according to any of the preceding claims, wherein the reducing step (ii) is initiated in response to an event selected from the group consisting of:
(a) a temperature in the plant exceeding a threshold value;
(b) a pressure in the plant exceeding a threshold value; and
(c) a malfunction of a component in the plant.

6. The process according to any of the preceding claims, wherein the plant further comprises:
C. a valve, being located in the recycle connection, or in a component situated in fluid communication between the reactor outlet side and the inlet of the recycle connection, wherein the valve has a closed position and an open position; and
D. a receiver for receiving fluid from the recycle connection through the valve when the valve is in the open position, and
wherein the valve moves from the closed position to the open position as the pressure in the recycle connection exceeds a set pressure p_{c}², wherein the relation of p_{c}¹ and p_{c}² is p_{c}¹ < p_{c}² ≤ 1.5 ^{∗} p_{c}¹; and
the valve moves from the open position to the closed position as the pressure in the recycle connection decreases below a reset pressure p_{c}³, wherein the relation of p_{c}¹ and p_{c}³ is 0.7 ^{∗} p_{c}¹ < p_{c}³ ≤ p_{c}¹.

7. The process according to claim 6, wherein the receiver is a flare or a cracker or both.

8. The process according to any of the preceding claims, wherein, during the polymerization phase, ethylene is supplied to the plant with a flow rate FR_{E}¹ and, during the partial shutdown phase, ethylene is supplied to the plant with a flow rate FR_{E}², wherein the relation of FR_{E}¹ and FR_{E}² is FR_{E}² ≤ 0.1 ^{∗} FR_{E}¹.

9. The process according to any of the preceding claims, wherein the plant further comprises:
E. a compressor, being
(a) located in fluid communication between the outlet of the recycle connection and the reactor inlet and
(b) operated during the partial shutdown phase.

10. The process according to any of the preceding claims, wherein the plant comprises a product outlet valve, being located between the inlet side of the recycle connection and the product output of the plant, wherein the valve is more open during the polymerization phase than during the partial shutdown phase.

11. A process for the preparation of a downstream product comprising the following preparation steps:
(a) preparing an ethylene-based polymer by a process according to any of the claims 1 to 10; and
(b) further treating the ethylene-based polymer to obtain the downstream product.

12. The process according to any of the preceding claims, wherein the obtained ethylene-based polymer or the downstream product is converted into a shaped body.

## Patentansprüche

1. Verfahren zum Polymerisieren von Ethylen und gegebenenfalls einem oder mehreren Comonomeren, um ein Polymer auf Ethylenbasis in einer Anlage zu erhalten, die einen Polymerisationsreaktor mit einem Reaktoreinlass und einem Reaktorauslass umfasst,
wobei die Anlage umfasst:
A. eine Reaktoreinlassseite, die sich vorgeordnet zu dem Reaktoreinlass befindet, und eine Reaktorauslassseite, die sich nachgeordnet zu dem Reaktorauslass befindet; und
B. eine Rückführungsverbindung mit einem Einlass in Fluidkommunikation mit der Reaktorauslassseite der Anlage und einem Auslass in Fluidkommunikation mit der Reaktoreinlassseite der Anlage, und mit einem Fluidfluss von der Reaktorauslassseite der Anlage in die Rückführungsverbindung, und von der Rückführungsverbindung zu der Reaktoreinlassseite der Anlage,
wobei das Verfahren eine Polymerisationsphase, eine Teilabschaltphase und die folgenden Schritte umfasst:
i. Umsetzen von Ethylen und gegebenenfalls einem oder mehreren Comonomeren während der Polymerisationsphase, um bei einem Betriebsdruck in dem Reaktor pᵣ¹ und einem Betriebsdruck in der Rückführungsverbindung p_{c}¹ das Polymer auf Ethylenbasis zu erhalten,
ii. zum Eintritt in die Teilabschaltphase Reduzieren des Drucks in dem Reaktor von dem Druck pᵣ¹ auf einen Druck pᵣ², indem die Flussrate des Fluids aus der Reaktorauslassseite der Anlage in die Rückführungsverbindung erhöht wird, wobei die Beziehung von pᵣ¹ und pᵣ² pᵣ² ≤ 0,85 * pᵣ¹ ist; und
iii. zum Verlassen der Teilabschaltphase und erneuten Eintreten in die Polymerisationsphase Erhöhen des Drucks in dem Reaktor von dem Druck pᵣ² auf einen Druck pᵣ³, wobei die Beziehung von pᵣ² und pᵣ³ pᵣ³ ≥ 1,1 * pᵣ² ist,
wobei die Anlage Kompressoren einschließt, die den Druck eines Fluids in der Anlage erhöhen, und die Kompression des Fluids durch eine Kombination eines Primärkompressors und eines Sekundärprozessors durchgeführt wird, und wobei der Sekundärkompressor, der in Fluidverbindung mit dem Reaktor ist, und der Primärkompressor, der sich in Fluidkommunikation mit dem Einlass des Sekundärkompressors befindet, während der Teilabschaltung betrieben werden, und
wobei ein oder mehrere Initiatoren in den Reaktor eingespeist werden, und wobei der eine oder die mehreren Initiatoren während der Polymerisationsphase mit einer Flussrate FRiₙ¹ eingespeist werden; und der eine oder die mehreren Initiatoren während der Teilabschaltphase mit einer Flussrate FRᵢₙ² eingespeist werden, wobei die Beziehung von FRᵢₙ¹ und FRᵢₙ² FRᵢₙ² ≤ 0,10 * FRᵢₙ¹ ist.

2. Verfahren nach Anspruch 1, wobei der Betriebsdruck pᵣ¹ in dem Reaktor im Bereich von 100 bis 400 MPa liegt.

3. Verfahren nach Anspruch 1 oder 2, wobei der Betriebsdruck in der Rückführungsverbindung p_{c}¹ im Bereich von 15 bis 50 MPa liegt.

4. Verfahren nach einem der vorhergehenden Ansprüche, wobei der Reduktionsschritt (ii) in einem Zeitraum von 5 Sekunden bis 15 Minuten stattfindet.

5. Verfahren nach einem der vorhergehenden Ansprüche, wobei der Reduktionsschritt (ii) in Reaktion auf ein Ereignis initiiert wird, das ausgewählt ist aus der Gruppe bestehend aus:
(a) eine Temperatur in der Anlage überschreitet einen Schwellenwert;
(b) ein Druck in der Anlage überschreitet einen Schwellenwert; und
(c) einer Fehlfunktion einer Komponente in der Anlage.

6. Verfahren nach einem der vorhergehenden Ansprüche, wobei die Anlage ferner umfasst:
C. ein Ventil, das sich in der Rückführungsverbindung befindet, oder in einer Komponente, die sich in Fluidkommunikation zwischen der Reaktorauslassseite und dem Einlass der Rückführungsverbindung befindet, wobei das Ventil eine geschlossene Position und eine offene Position aufweist; und
D. einen Empfänger zum Empfangen von Fluid aus der Rückführungsverbindung durch das Ventil hindurch, wenn das Ventil in der offenen Position ist, und
wobei sich das Ventil von der geschlossenen Position in die offene Position bewegt, wenn der Druck in der Rückführungsverbindung einen Solldruck p_{c}² übersteigt, wobei die Beziehung von p_{c}¹ und p_{c}² p_{c}¹ < p_{c}² ≤ 1,5 * p_{c}¹ ist; und
das Ventil sich von der offenen Position in die geschlossene Position bewegt, wenn der Druck in der Rückführungsverbindung unter einen Rückstelldruck p_{c}³ sinkt, wobei die Beziehung von p_{c}¹ und p_{c}³ 0,7 * p_{c}¹ < p_{c}³ ≤ p_{c}¹ ist.

7. Verfahren nach Anspruch 6, wobei der Empfänger eine Fackel oder ein Cracker oder beides ist.

8. Verfahren nach einem der vorhergehenden Ansprüche, wobei der Anlage Ethylen während der Polymerisationsphase mit einer Flussrate FR_{E}¹ zugeführt wird, und der Anlage Ethylen während der Teilabschaltphase mit einer Flussrate FR_{E}² zugeführt wird, wobei die Beziehung von FR_{E}¹ und FR_{E}² FR_{E}² ≤ 0,1 * FR_{E}¹ ist.

9. Verfahren nach einem der vorhergehenden Ansprüche, wobei die Anlage ferner umfasst:
E. einen Kompressor, der
(a) sich in Fluidkommunikation zwischen dem Auslass der Rückführungsverbindung und dem Reaktoreinlass befindet, und
(b) während der Teilabschaltphase betrieben wird.

10. Verfahren nach einem der vorhergehenden Ansprüche, wobei die Anlage ein Produktauslassventil umfasst, das sich zwischen der Einlassseite der Rückführungsverbindung und dem Produktauslass der Anlage befindet, wobei das Ventil während der Polymerisationsphase offener ist als während der Teilabschaltphase.

11. Verfahren zur Herstellung eines nachgeordneten Produkts, umfassend die folgenden Herstellungsschritte:
a) Herstellen eines Polymers auf Ethylenbasis nach einem Verfahren gemäß einem der Ansprüche 1 bis 10; und
b) Weiterbehandeln des Polymers auf Ethylenbasis, um das nachgeordnete Produkt zu erhalten.

12. Verfahren nach einem der vorhergehenden Ansprüche, wobei das erhaltene Polymer auf Ethylenbasis oder nachgeordnete Produkt in einen geformten Körper umgewandelt wird.

## Revendications

1. Procédé de polymérisation de l'éthylène, et optionnellement d'un ou de plusieurs comonomères, pour obtenir un polymère à base d'éthylène dans une installation comprenant un réacteur de polymérisation ayant une entrée de réacteur et ayant une sortie de réacteur,
l'installation comprenant :
A. un côté entrée du réacteur, qui est situé en amont de l'entrée du réacteur et un côté sortie du réacteur, qui est situé en aval de la sortie du réacteur ; et
B. une liaison de recyclage ayant une entrée en communication fluidique avec le côté sortie du réacteur de l'installation et une sortie en communication fluidique avec le côté entrée du réacteur de l'installation et ayant un écoulement de fluide depuis le côté sortie du réacteur de l'installation dans la liaison de recyclage et à partir de la liaison de recyclage vers le côté entrée du réacteur de l'installation,
le procédé comprenant une phase de polymérisation, une phase de coupure partielle, et les étapes de :
i. pendant la phase de polymérisation, la réaction de l'éthylène et optionnellement d'un ou de plusieurs comonomères, pour obtenir le polymère à base d'éthylène à une pression de fonctionnement dans le réacteur pᵣ¹ et une pression de fonctionnement dans la liaison de recyclage p_{c}¹,
ii. pour entrer dans la phase de coupure partielle, la réduction de la pression dans le réacteur à partir de la pression de pᵣ¹ à une pression de pᵣ² par augmentation du débit de fluide depuis le côté sortie du réacteur de l'installation dans la liaison de recyclage, la relation de pᵣ¹ et pᵣ² étant pᵣ² ≤ 0,85 * pᵣ¹ ; et
iii. pour sortir de la phase de coupure partielle et réentrer dans la phase de polymérisation, augmenter la pression dans le réacteur à partir de la pression de pᵣ² jusqu'à une pression de pᵣ³, la relation entre pᵣ² et pᵣ³ étant pᵣ³ ≥ 1,1 * pᵣ²,
dans lequel l'installation comprend des compresseurs qui augmentent la pression d'un fluide dans l'installation et la compression du fluide est effectuée par une combinaison d'un compresseur primaire et d'un compresseur secondaire et dans lequel le compresseur secondaire en liaison fluidique avec le réacteur et le compresseur primaire situé en communication fluidique avec l'entrée du compresseur secondaire fonctionnent pendant la coupure partielle et
dans lequel un ou plusieurs initiateur(s) est(sont) introduit(s) dans le réacteur et dans lequel, pendant la phase de polymérisation, le ou les initiateur(s) est(sont) introduit(s) avec un débit FRᵢₙ¹ ; et, pendant la phase de coupure partielle, le ou les initiateur(s) est(sont) introduit(s) avec un débit FRᵢₙ², la relation entre FRᵢₙ¹ et FRᵢₙ² étant FRᵢₙ² ≤ 0,10 * FRᵢₙ¹.

2. Procédé selon la revendication 1, dans lequel la pression de fonctionnement pᵣ¹ dans le réacteur est comprise entre 100 et 400 MPa.

3. Procédé selon la revendication 1 ou 2, dans lequel la pression de fonctionnement dans la liaison de recyclage p_{c}¹ est comprise entre 15 et 50 MPa.

4. Procédé selon l'une quelconque des revendications précédentes, dans lequel l'étape de réduction (ii) se déroule sur une période de temps comprise entre 5 secondes et 15 minutes.

5. Procédé selon l'une quelconque des revendications précédentes, dans lequel l'étape de réduction (ii) est initiée en réponse à un événement choisi dans le groupe constitué par :
(a) une température dans l'installation dépassant une valeur seuil ;
(b) une pression dans l'installation dépassant une valeur seuil ; et
(c) un dysfonctionnement d'un composant dans l'installation.

6. Procédé selon l'une quelconque des revendications précédentes, l'installation comprenant, en outre :
C. une vanne, étant située dans la liaison de recyclage, ou dans un composant situé en communication fluidique entre le côté sortie du réacteur et l'entrée de la liaison de recyclage, la soupape ayant une position fermée et une position ouverte ; et
D. un récepteur pour recevoir un fluide provenant de la liaison de recyclage à travers la soupape lorsque la soupape est dans la position ouverte, et
dans lequel la soupape passe de la position fermée à la position ouverte lorsque la pression dans la liaison de recyclage dépasse une pression définie p_{c}², la relation entre p_{c}¹ et p_{c}² étant p_{c}¹ < p_{c}² ≤ 1,5 * p_{c}¹ ; et
la soupape passe de la position ouverte à la position fermée lorsque la pression dans la liaison de recyclage tombe au-dessous d'une pression de réinitialisation p_{c}³, la relation entre p_{c}¹ et p_{c}³ étant 0,7 * p_{c}¹ < p_{c}³ ≤ p_{c}¹.

7. Procédé selon la revendication 6, dans lequel le récepteur est un évasement ou un craqueur ou les deux.

8. Procédé selon l'une quelconque des revendications précédentes, dans lequel, pendant la phase de polymérisation, l'éthylène est fourni à l'installation avec un débit FR_{E}¹ et, pendant la phase de coupure partielle, l'éthylène est fourni à l'installation avec un débit FR_{E}², la relation entre FR_{E}¹ et FR_{E}² étant FR_{E}² ≤ 0,1 * FR_{E}¹.

9. Procédé selon l'une quelconque des revendications précédentes, l'installation comprenant, en outre :
E. un compresseur,
(a) étant situé en communication fluidique entre la sortie de la liaison de recyclage et l'entrée du réacteur et
(b) mis en oeuvre pendant la phase de coupure partielle.

10. Procédé selon l'une quelconque des revendications précédentes, l'installation comprenant une soupape de sortie de produit, étant située entre le côté d'entrée de la liaison de recyclage et la sortie de produit de l'installation, la soupape étant plus ouverte pendant la phase de polymérisation que pendant la phase de coupure partielle.

11. Procédé de préparation d'un produit en aval comprenant les étapes de préparation suivantes :
(a) la préparation d'un polymère à base d'éthylène par un procédé selon l'une quelconque des revendications 1 à 10 ; et
(b) le traitement supplémentaire du polymère à base d'éthylène pour obtenir le produit en aval.

12. Procédé selon l'une quelconque des revendications précédentes, dans lequel le polymère à base d'éthylène obtenu ou le produit en aval est converti en un corps façonné.
